# EUROPÄISCHE PATENTANMELDUNG

(11) **EP 1 653 169 A2**
(43) Veröffentlichungstag der Anmeldung: **03.05.2006**
(21) Anmeldenummer: 05023456.6
(22) Anmeldetag: 27.10.2005
(51) Int. Cl.: F25B 17/08

(54) **Sorptions-Kühleinrichtung mit Ventil**

(30) Priorität: 28.10.2004 DE 202004016750 U
(71) Anmelder: HUPFER Metallwerke GmbH & Co. KG, 48653 Coesfeld (DE)
(72) Erfinder:
(74) Vertreter: Habbel, Ludwig

(57) **Zusammenfassung**

Die Erfindung schlägt eine Sorptions-Kühleinrichtung vor,
■ mit einem Sorber und einem Verdampfer,
■ mit einem zwischen dem Feststoffabsorber und der Flüssigkeit verlaufenden Strömungskanal für ein Fluid,
■ mit einer Ventilanordnung,
   - die in dem Strömungskanal angeordnet ist,
   - einen Ventilkörper aufweist,
   - und eine Dichtfläche,
   - wobei der Ventilkörper längsbeweglich gelagert ist zwischen einer ersten Endstellung, in welcher er eine den Strömungskanal unterbrechende und der Dichtfläche anliegende Schließstellung einnimmt und einer zweiten Endstellung, in welcher er eine den Strömungskanal freigebende und von der Dichtfläche beabstandete Offenstellung einnimmt,
   - und wobei der Ventilkörper in diesen beiden Endstellungen von jeweils einem andauernd wirksamen Kraftelement - wie von einer Feder oder von einem Permanentmagneten - gehalten wird,
   - und mit jeweils einem lediglich zeitweise wirksamen Kraftelement - wie einem Elektromagneten oder einem motorisch betätigten Element -, welches den Ventilkörper aus seiner jeweiligen Endstellung löst,
■ sowie mit einer Steuerung, welche die Ventilanordnung ansteuert, derart, dass der Ventilkörper steuerungsabhängig seine Offenstellung oder seine Schließstellung einnimmt,
■ wobei die Steuerung jeweils lediglich zeitlich kurz bemessen die Zufuhr elektrischer Energie zu dem lediglich zeitweise wirksamen Kraftelement freischaltet.

## Beschreibung

Die Erfindung betrifft eine Sorptions-Kühleinrichtung. Derartige Kühleinrichtungen weisen den Vorteil auf, dass sie ohne elektrische Energiezufuhr eine große Kühlleistung verfügbar machen. Der Zeitpunkt

Für Sorptions-Kühleinrichtungen ist es häufig kennzeichnend, dass der Sorptionsvorgang sehr schnell und vollständig abläuft und dass dementsprechend eine schlagartige und vollständige Freisetzung der Kühlleistung auftreten kann. Verglichen mit einer einzuhaltenden, niedrigen Soll-Temperatur wird daher häufig eine unnötig noch tiefere Temperatur erreicht. Je größer der Temperaturgradient zwischen dem gekühlten Bereich und der Umgebungstemperatur ist, desto größer sind Kühlverluste an die Umgebung. Um eine lang anhaltende Kühlwirkung zu ermöglichen, ist eine entsprechend aufwendige Isolierung eines zu kühlenden Behälters erforderlich. Das Öffnen des Behälters verringert die Zeitspanne, innerhalb der ein bestimmtes, niedriges Temperaturniveau eingehalten und nicht überschritten wird, da nach der einmal erfolgten Abkühlung nicht erneut gekühlt werden kann, nachdem der Sorptionsvorgang einmal abgelaufen ist.

Der Erfindung liegt die Aufgabe zugrunde, eine Sorptions-Kühleinrichtung zu schaffen, die mit einem möglichst geringen Maß an elektrischer Energie auskommt und eine Dosierung der Kühlwirkung ermöglicht.

Diese Aufgabe wird durch eine Sorptions-Kühleinrichtung mit den Merkmalen des Anspruches 1 gelöst.

Die Erfindung schlägt mit anderen Worten die Anordnung eines in seinen beiden Endstellungen selbsthaltenden Ventils in einer Sorptions-Kühleinrichtung vor, bei welchem Ventil also der Ventilkörper sowohl in der Offenstellung als auch in der Schließstellung - und zwar dann auch ohne weitere Beeinflussung durch die Steuerung - dauerhaft verbleibt. Das Ventil unterbricht den Sorptionsvorgang, indem der Sorber vom Verdampfer/Kondensator getrennt wird, so dass der Sorptionsvorgang nicht mehr vollständig, die gesamte Kühlwirkung auf einmal freisetzend, ablaufen kann. Dabei nimmt der Ventilkörper seine Schließstellung ein, in welcher er einer Dichtfläche anliegt. Somit werden mit Hilfe eines flacheren Temperaturgradienten die Kühlverluste verringert, verglichen mit einem Temperaturgradienten, der sich nach einem ununterbrochenen, vollständig abgelaufenen Sorptionsvorgang einstellen würde. Die Einhaltung einer gewünschten Temperatur kann über eine vergleichsweise lange Zeit sichergestellt werden. Kühlverluste durch, z. B. geöffnete Türen eines zu kühlenden Behälters können dadaurch ausgeglichen werden, dass der Sorptionsvorgang bei entsprechender Ventilstellung erneut abläuft, und zwar ggf. wiederum nicht bis zum Ende, sondern vorzeitig erneut unterbrochen wird. In seiner Offenstellung, in welcher der Ventilkörper von der Dichtfläche beabstandet ist, gibt er die Strömung eines Arbeitsmitteldampfes durch den Strömungskanal zum Sorber frei.

Der grundsätzliche Vorteil einer Sorptions-Kühleinrichtung, nämlich ohne elektrischen Netzanschluss betrieben zuwerden, kann dabei erhalten werden: dadaurch, dass das Ventil nicht ständig die Zufuhr von Energie benötigt, sondern nur jeweils kurzfristig für die Umschaltvorgänge, reicht ein vergleichsweise kleiner, problemlos transportabler bzw. mobiler elektrischer Energiespeicher aus, um die Funktion der Sorptions-Kühleinrichtung einschließlich der Ventilsteuerung zu ermöglichen.

Ventilanordnungen ohne eine eigens vorgesehene Steuerung sind bekannt, bei denen der Ventilkörper in Abhängigkeit von Umgebungsparametern seine Stellung verändert. Beispielsweise ist dies von Rückschlag- oder Überdruckventilen bekannt, die druckabhängig öffnen oder schließen, sowie weiterhin von Ventilen, die beispielsweise mittels Bimetallstreifen, Ausdehnungskörpern aus Wachs od. dgl. temperaturabhängig öffnen oder schließen.

Eine durch eine Steuerung beeinflußbare Ventilanordnung bietet innerhalb der Sorptions-Kühleinrichtung vorteilhaft die Möglichkeit, auch dann das Ventil zu öffnen oder zu schließen, wenn sich die Umgebungsparameter lediglich geringfügig ändern, was beispielsweise für eine selbsttätige Beeinflussung des Ventils nicht ausreichen würde, oder die Möglichkeit, das Ventil lediglich zeitabhängig zu öffnen oder zu schließen, nämlich mittels der vorgesehenen Steuerung.

Hierzu sind permanent wirkende Kraftelemente vorgesehen, beispielsweise Federn. Anstelle von Federn sind beispielsweise auch Permanentmagnete als derartige permanent wirkende Kraftelemente verwendbar. Gegen die als "Selbsthaltekraft" bezeichnete Wirkung der andauernd wirkenden Kraftelemente kann der Ventilkörper aus seiner jeweiligen Endstellung gelöst werden.

Der Impuls, seine jeweilige Endstellung zu verlassen und in die jeweils andere Endstellung zu gelangen, erfolgt durch ein lediglich zeitweise wirkendes Kraftelement. Dieses Kraftelement kann berührungslos arbeiten, wie beispielsweise ein Elektromagnet, oder es kann als schwenkbarer Nocken bzw. längsbeweglicher Stößel - nachfolgend wird vereinfachend und stellvertretend stets nur von einem Stößel die Rede sein - durch mechanischen Kontakt mit dem Ventilkörper auf diesen einwirken.

In sämtlichen Fällen kann der Ventilkörper aus seiner jeweiligen Endstellung mit Hilfe des lediglich zeitweise wirkenden Kraftelementes unter Überwindung der Selbsthaltekräfte gelöst werden, so dass der Ventilkörper in den Einflußbereich des jeweils anderen permanent wirkenden Kraftelementes gelangt, welches den Ventilkörper dann in seiner jeweils anderen Endstellung hält, so dass nunmehr die Energiezufuhr zu dem lediglich zeitweise wirksamen Kraftelement unterbrochen bzw. abgeschaltet werden kann und ohne Zufuhr weiterer Energie die Ventilanordnung ihre nun eingenommene Stellung beibehält.

Das lediglich zeitweise wirkende Kraftelement wird elektrisch aktiviert, durch Zufuhr eines vergleichsweise kurzen, impulsartigen Stromflusses, so dass es - über die gesamte Betriebsdauer der Ventilanordnung und die gesamte Kühldauer der Sorptions-Kühlvorrichtung gesehen - vergleichsweise wenig elektrische Energie verbraucht.

Insbesondere kann eine derartige Ventilanordnung vorteilhaft im Bereich von transportablen bzw. mobilen Kühleinrichtungen angewendet werden, so dass diese unabhängig vom Stromnetz funktionsfähig sind. Dabei ist es bekannt, mit Hilfe sogenannter Absorbertechnologien Kühleinrichtungen unabhängig von einer äußeren Energiezufuhr zu betreiben. Beispielsweise kann ein Zeolithwerkstoff als Feststoffabsorber mit Wasser zusammenwirken. Durch die intensiv wirkende Verdunstungskälte des Wassers kann eine schlagartige, starke Kühlwirkung erzielt werden. An Stelle von Zeolith und Wasser können auch andere geeignete Stoffe verwendet werden.

Mittels der vorschlagsgemäß vorgesehenen Ventilanordnung kann diese Kühlwirkung dosiert werden, derart, dass lediglich intervallweise gekühlt und lediglich ein Teil der gesamten Kühlleistung genutzt wird. Auf diese Weise kann beispielsweise ein Tabletttransportwagen, auf dem tablettweise einzelne Mahlzeiten bereitgehalten werden, über einen längeren Zeitraum innerhalb eines gewünschten Temperaturbereiches gehalten werden. Derartige Tabletttransportwagen werden in Großküchen verwendet, wie sie in Kantinen oder Krankenhäusern üblich sind. Die einzelnen Mahlzeiten können in einer zentralen Küche bereitet werden und der mit diesen Mahlzeiten bestückte Tablettwagen kann dann von der zentralen Küche zu seinem vorgesehenen Einsatzort verfahren werden, beispielsweise zu einer Station in einem Krankenhaus. Durch die Kühlwirkung ist sichergestellt, dass die Speisen lebensmittelrechtlich unbedenklich gelagert werden können. Wenn die Ausgabe erhitzter Speisen vorgesehen ist, können diese in der Küche vorgegart werden, im Tabletttransportwagen nahe dem Ort der späteren Speisenausgabe gekühlt bereitgehalten werden, und erst kurz vor der Ausgabe der Speisen erhitzt ("regeneriert") werden.

Die intervallweise mögliche Kühlung des Speisentransportwagens, also der mit einer vorgeschlagenen Ventilanordnung versehenen Kühleinrichtung, ermöglicht das Einhalten der Temperatur im Inneren dieser Kühleinrichtung in einem vorgegebenen Toleranzbereich. Es muß also nicht beispielsweise stark heruntergekühlt werden, beispielsweise bis nahe oder gar unterhalb des Gefrierpunktes, um mittels einer derartigen Temperaturabsenkung sicherzustellen, dass bis zur Speisenausgabe eine zuträgliche Maximaltemperatur im Inneren der Kühleinrichtung nicht überschritten wird. Vielmehr kann vorschlagsgemäß durch das mehrfache intervallweise Betätigen der Ventilanordnung jeweils lediglich eine Teilleistung der insgesamt verfügbaren Kühlleistung des Feststoffabsorbers aktiviert bzw. abgerufen werden.

Dabei ist vorteilhaft, dass nur in sehr begrenztem Maße elektrische Energie benötigt wird: Die hauptsächlich benötigte Energiemenge, nämlich für die Kühlleistung, wird ohne Elektrizität durch die Feststoff-Absorber-Kühlung bereitgestellt. Lediglich eine kleine elektrische Energiemenge muß jeweils zur Aktivierung des lediglich zeitweise wirkenden Kraftelementes bereitgestellt werden, um den jeweiligen Umschaltvorgang des Ventils zu bewirken und dieses von seiner Schließstellung in die Offenstellung oder umgekehrt umzuschalten. Da hierfür jeweils ein vergleichsweise kurzzeitig bemessener elektrischer Impuls erforderlich ist, kann ein dementsprechend klein bemessener elektrischer Energiespeicher in der mobilen bzw. transportablen Kühleinrichtung verwendet werden, beispielsweise ein Akkumulator, der wenig Bauraum benötigt und ein lediglich geringes Eigengewicht aufweist, was für die Platzausnutzung sowie die Handhabbarkeit der Kühleinrichtung vorteilhaft ist.

Die berührungslose Funktionsweise des lediglich zeitweise wirkenden Kraftelementes, wenn es beispielsweise als Elektromagnet ausgestaltet ist, ermöglicht problemlos, dieses Kraftelement luftdicht von dem Strömungskanal zu trennen, den das Ventil wahlweise öffnet oder unterbricht. Falls das lediglich zeitweise wirkende Kraftelement jedoch nicht berührungslos arbeitet, sondern beispielsweise als Stößel ausgestaltet ist und den Ventilkörper mechanisch kontaktiert, so können vorteilhaft sämtliche beweglichen Bauteile des lediglich zeitweise wirkenden Kraftelementes zusammen mit dem Ventilkörper innerhalb eines luftdichten Gehäuses angeordnet sein, welcher ggf. mit dem Strömungskanal strömungsmäßig kommuniziert. Die Energieversorgung kann vorzugsweise mittels eines Energiespeichers erfolgen und beispielsweise in Form eines Akkumulators oder Kondensators ausgestaltet sein, welcher vorzugsweise ebenfalls innerhalb dieses Gehäuses angeordnet ist, so dass keine die Dichtheit des Gehäuses beeinträchtigenden Durchbrüche für elektrische Zuleitungen erforderlich sind. Die Aufladung des Energiespeichers kann in diesem Fall vorteilhaft berührungslos erfolgen, beispielsweise induktiv, so dass sie bei geschlossenem, unterbrechungsfreiem Gehäuse erfolgen kann. Insbesondere ist durch die Verwendung eines Energiespeichers die Abgabe vergleichsweise hoher elektrischer Energie innerhalb kurzer Zeit möglich, während die Aufladung des Energiespeichers mittels vergleichsweise geringer elektrischer Energie innerhalb eines längeren Zeitraums erfolgen kann, also beispielsweise berührungslos, ohne elektrische Zuleitungen oder Kontakte, welche potentielle Gefahrenstellen für die Dichtheit des erwähnten Gehäuses darstellen.

Vorteilhaft kann vorgesehen sein, dass die Haltekraft des andauernd wirkenden Kraftelements derart bemessen ist, dass es bei einem im Sorber herrschenden Schwellwert-Überdruck eine Öffnung des in seiner Schließstellung befindlichen Ventils gegen die Selbsthaltekraft ermöglicht, derart, dass Arbeitsmitteldampf, also beispielsweise Wasserdampf, in den Verdampfer zurückströmen kann, jedoch keinesfalls Arbeitsmitteldampf vom Verdampfer/Kondensator in den Sorber strömen kann. Beschädigungen der Kühleinrichtung werden so vermieden und es ist sichergestellt, dass bei entsprechend hohen Dampfdrücken das Ventil automatisch öffnet, auch ohne Einfluss durch die Steuerung, z. B. bei Ausfall der elektrischen Energieversorgung für die Steuerung.

Insbesondere wenn Wasser als Arbeitsmittel vorgesehen ist, kann die vorgenannte Öffnung des Ventils bei einem Druck von 20 mbar oder mehr als Schwellwert vorgesehen sein. Der absolute Wert der entsprechenden Kraft bemisst sich bei der konstruktiven Ausgestaltung des Kraftelementes in Anpassung an die jeweilige, konkret vorliegende Ventilgeometrie.

Vorteilhaft kann vorgesehen sein, dass die Betätigungskraft des lediglich zeitweise wirkenden Kraftelements derart bemessen ist, dass es das Ventil auch bei einem im Verdampfer/Kondensator herrschenden Überdruck öffnen kann. Insbesondere wenn bei Erwärmung der Kühleinrichtung der Dampfdruck im Verdampfer steigt, ist so sichergestellt, dass der Sorptionsvorgang zuverlässig in Gang gesetzt werden und das Ventil auch gegen den im Verdampfer herrschenden Druck geöffnet werden kann.

Insbesondere wenn Wasser als Arbeitsmittel vorgesehen ist, kann die vorgenannte Betätigung des Ventils bis zu einem Druck von 100 mbar ermöglicht sein. Der absolute Wert der entsprechenden Öffnungskraft bemisst sich bei der konstruktiven Ausgestaltung des Kraftelementes in Anpassung an die jeweilige, konkret vorliegende Ventilgeometrie.

Vorteilhaft kann, insbesondere wenn Wasser als Arbeitsmittel vorgesehen ist, der freie Strömungsquerschnitt des Strömungskanals wenigstens 20 cm² betragen. So wird ein rascher Gaswechsel ermöglicht und sowohl das Kühlen als insbesondere auch der spätere Regenerierungs-Vorgang erleichtert.

Weitere vorteilhafte Ausgestaltungen der Erfindung sind in den Unteransprüchen beschrieben, deren Inhalt zur Vermeidung von Wiederholungen ausdrücklich zum Gegenstand der vorliegenden Beschreibung gemacht wird.

Ein Ausführungsbeispiel der Erfindung wird nachfolgend näher erläutert.

Eine Sorptions-Kühleinrichtung weist ein Rohr auf, welches als Teil eines Strömungskanals zwischem einem Zeolith-Werkstoff als Feststoffabsorber und einem Wasservorrat verläuft. Eine Ventilanordnung weist ein Rohr auf, in welchem umfangsmäßig drei Fenster vorgesehen sind. Die Fenster ermöglichen den Eintritt eines Fluids - nämlich des Wasserdampfes - in das Rohr bzw. - je nach konstruktiver Ausgestaltung der Sorptions-Kühleinrichtung - den Austritt eines Fluids aus dem Rohr. Der Rohrquerschnitt wird durch einen Ventilkopf verschlossen, welcher tellerartig ausgestaltet ist und ein elastisches Dichtungselement in Form eines Dichtringes trägt. In die Wandung des Rohres ist ein Absatz eingefräst, welcher eine Dichtfläche bildet, wobei diese Dichtfläche den Dichtsitz für den Ventilkopf bildet.

Der Ventilkopf ist Teil eines insgesamt beweglichen Ventilkörpers, wobei der Ventilkörper außer dem Ventilkopf einen Schaft aufweist. Der Ventilkopf ist mit dem Schaft mittels einer Schraube verschraubt, unter Zwischenschaltung und Komprimierung zweier elastischer Elemente in Form von zwei O-Ringen. Diese O-Ringe dienen einerseits zur Abdichtung, und dienen andererseits zum Toleranzausgleich: Wenn die Länge des Ventilkörpers aufgrund von Fertigungstoleranzen geringfügig geändert und angepaßt werden soll, kann dies mittels der Schraube erfolgen, da hierdurch der Kompressionsgrad der beiden elastischen Elemente beeinflußt werden kann und somit die Länge zwischen dem äußersten Ende des Schaftes und dem elastischen Dichtungselement, also der wirksamen Dichtfläche des Ventilkopfes, beeinflußt werden kann.

Durch den Druck einer Druckfeder wird der Ventilkörper in seiner Schließstellung gehalten, in welcher mit seinem Dichtring an dem die Dichtfläche bildenden Absatz der Rohrwandung anliegt. Dabei befindet sich der Ventilkopf - in axialer Richtung des Rohres gesehen - auf der einen Seite der drei Fenster.

Gegen den Druck der Druckfeder kann der Ventilkörper verschoben werden und eine Offenstellung einnehmen, in welcher eine strömungsdurchlässige Verbindung zwischen dem Inneren des Rohres und den Fenstern geschaffen wird. In dieser Offenstellung wird der Ventilkörper durch einen Dauermagneten gehalten, und zwar gegen die Wirkung der dann komprimierten Druckfeder. Dabei befindet sich der Ventilkopf - in axialer Richtung des Rohres gesehen - auf der anderen Seite der drei Fenster.

Die Umschaltvorgänge des Ventils werden mittels eines Elektromagneten bewirkt, welcher je nach seiner elektrischen Ansteuerung den Ventilkörper entweder anzieht oder abstößt. Mit Hilfe dieses Elektromagneten können daher die Haltekräfte sowohl der Druckfeder, die den Ventilkörper in seiner Schließstellung hält, als auch des Dauermagneten überwunden werden, welcher den Ventilkörper in seiner Offenstellung hält. Die Ventilanordnung benötigt also lediglich impulsweise kurzfristige elektrische Energiezufuhr, nämlich zum Elektromagneten, um einen Umschaltvorgang des Ventils auszulösen und stellt ansonsten sicher, dass das Ventil auch im stromlosen Zustand seine eingenommene Ventilstellung, nämlich die Offenstellung oder die Schließstellung, selbsttätig beibehält.

Insbesondere vorteilhaft kann die Sorptions-Kühleinrichtung mit ihrer Ventilanordnung im Rahmen eines mobilen Bestandteils einer Großkücheneinrichtung verwendet werden, wie z. B. in einem Tabletttransportwagen.

Bei dem beschriebenen Ausführungsbeispiel führt das Rohr zu einem Feststoff-Absorber, beispielsweise zu einem Zeolith-Granulat. Die erwähnten Fenster hingegen stehen mit einem Verdampfer in Verbindung, welcher beispielsweise Wasser enthält. Die Öffnung des Ventils erfolgt vorzugsweise durch eine Steuerung, so dass intervallweise ein Anteil der Kühlleistung abgerufen wird, deren Maximalleistung durch die Menge von Zeolith und Wasser vorgegeben ist. Im übrigen erfolgt eine automatische, Öffnung des Ventils spätestens dann auch unabhängig von der Steuerung, wenn bei der Regenerierung der Kühleinrichtung der Sorber aufgeheizt wird und dementsprechender Dampfdruck im Bereich dieses Sorbers und im Rohr vorliegt, so dass eine Beschädigung der Kühleinrichtung oder der Ventilanordnung durch den sich einstellenden Dampfdruck ausgeschlossen ist und die Ventilanordnung eine Sicherheitsschaltung darstellt, die auch ohne Einflußnahme durch die Steuerung ein automatisches Öffnen des Ventils bei entsprechenden sorberseitigen Dampfdrücken sicherstellt.

Bei der Ventilanordnung ist eine Flanschplatte vorgesehen, die ein etwa becherförmiges Gehäuse zum Rohr hin abschließt, wobei das Gehäuse einen Teil des Schaftes aufnimmt sowie die beiden Dauer- bzw. Elektro-Magnete, und wobei das Gehäuse weiterhin eine elektrische Anschlußfläche trägt, mit den elektrischen Kontakten zum Anschluß einer elektrischen Energieversorgung für den Elektromagneten.

## Patentansprüche

1. Sorptions-Kühleinrichtung,
■ mit einem Sorber und einem Verdampfer,
■ mit einem zwischen dem Feststoffabsorber und der Flüssigkeit verlaufenden Strömungskanal für ein Fluid,
■ mit einer Ventilanordnung,
- die in dem Strömungskanal angeordnet ist,
- einen Ventilkörper aufweist,
- und eine Dichtfläche,
- wobei der Ventilkörper längsbeweglich gelagert ist zwischen einer ersten Endstellung, in welcher er eine den Strömungskanal unterbrechende und der Dichtfläche anliegende Schließstellung einnimmt und einer zweiten Endstellung, in welcher er eine den Strömungskanal freigebende und von der Dichtfläche beabstandete Offenstellung einnimmt,
- und wobei der Ventilkörper in diesen beiden Endstellungen von jeweils einem andauernd wirksamen Kraftelement - wie von einer Feder oder von einem Permanentmagneten - gehalten wird,
- und mit jeweils einem lediglich zeitweise wirksamen Kraftelement - wie einem Elektromagneten oder einem motorisch betätigten Element -, welches den Ventilkörper aus seiner jeweiligen Endstellung löst,
■ sowie mit einer Steuerung, welche die Ventilanordnung ansteuert, derart, dass der Ventilkörper steuerungsabhängig seine Offenstellung oder seine Schließstellung einnimmt,
■ wobei die Steuerung jeweils lediglich zeitlich kurz bemessen die Zufuhr elektrischer Energie zu dem lediglich zeitweise wirksamen Kraftelement freischaltet.

2. Sorptions-Kühleinrichtung nach Anspruch 1, **dadurch gekennzeichnet, dass** ein Elektromagnet als zeitweise wirksames Kraftelement vorgesehen ist, welches auf den Ventilkörper in wenigstens einer von dessen beiden Endstellungen einwirkt.

3. Sorptions-Kühleinrichtung nach Anspruch 2, **dadurch gekennzeichnet, dass** ein umpolbarer Elektromagnet in beiden Endstellungen auf den Ventilkörper einwirkt.

4. Sorptions-Kühleinrichtung nach Anspruch 1, **dadurch gekennzeichnet, dass** ein elektromotorisch betätigter Stößel als zeitweise wirksames Kraftelement vorgesehen ist, welches in einer Endstellung auf den Ventilkörper einwirkt.

5. Sorptions-Kühleinrichtung nach einem der vorhergehenden Ansprüche, **gekennzeichnet durch** eine Feder, welche als permanent wirkendes Kraftelement den Ventilkörper gegen die Dichtfläche drückt.

6. Sorptions-Kühleinrichtung nach einem der vorhergehenden Ansprüche, **gekennzeichnet durch** einen Permanentmagneten, welcher als permanent wirkendes Kraftelement den Ventilkörper in seiner Offenstellung hält.

7. Sorptions-Kühleinrichtung nach einem der vorhergehenden Ansprüche, **dadurch gekennzeichnet, dass** der Ventilkörper im wesentlichen pilzförmig ausgestaltet ist, mit einem in seiner Bewegungsrichtung axial verlaufenden Schaft und einem sich demgegenüber radial erstreckenden Ventilkopf.

8. Sorptions-Kühleinrichtung nach den Ansprüchen 2 und 7, **dadurch gekennzeichnet, dass** der Schaft den Anker des Elektromagneten bildet.

9. Sorptions-Kühleinrichtung nach den Ansprüchen 6 und 7, **gekennzeichnet durch** einen sich radial vom Schaft nach außen erstreckenden Vorsprung, welcher mit dem Permanentmagneten zusammenwirkt.

10. Sorptions-Kühleinrichtung nach Anspruch 7, **dadurch gekennzeichnet, dass** der Ventilkopf als separates Bauteil ausgestaltet und mit dem Schaft verbunden ist.

11. Sorptions-Kühleinrichtung nach Anspruch 10, **dadurch gekennzeichnet, dass** zwischen Schaft und Ventilkopf wenigstens ein elastisches Element angeordnet ist, und der Ventilkopf mit dem Schaft unter Komprimierung dieses elastischen Elementes verschraubt ist.

12. Sorptions-Kühleinrichtung nach einem der vorhergehenden Ansprüche, **dadurch gekennzeichnet, dass** am Ventilkörper oder an der Dichtfläche ein elastisches Dichtungselement vorge-sehen ist, welches in der Schließstellung des Ventilkörpers dem jeweils anderen Bauteil abdichtend anliegt.

13. Sorptions-Kühleinrichtung nach einem der vorhergehenden Ansprüche, **dadurch gekennzeichnet, dass** die beweglichen Bauteile der Ventilanordnung innerhalb eines luftdichten Gehäuses angeordnet sind, welches luftdicht an den Strömungskanal anschließt.

14. Sorptions-Kühleinrichtung nach den Ansprüchen 2 und 13, **dadurch gekennzeichnet, dass** der Elektromagnet außerhalb des Gehäuses angeordnet ist und auf den innerhalb des Gehäuses angeordneten Ventilkörper einwirkt.

15. Sorptions-Kühleinrichtung nach den Ansprüchen 4 und 13, **dadurch gekennzeichnet, dass** innerhalb des Gehäuses folgende Bauteile angeordnet sind:
der Stößel und der Ventilkörper, auf welchen der Stößel einwirkt, ein dem Stößel zugeordneter elektrischer Antriebsmotor, und ein Speicher für elektrische Energie, welcher wirksam mit dem Antriebsmotor verbunden ist, und dass außerhalb des Gehäuses Anschlussmittel zur drahtlosen - wie induktiven - Übertragung von elektrischer Energie angeordnet sind, derart, dass der Energiespeicher durch das unterbrechungsfreie Gehäuse hindurch aufladbar ist.

16. Sorptions-Kühleinrichtung nach einem der vorhergehenden Ansprüche, **dadurch gekennzeichnet, dass** ein Zeolith-Werkstoff als Sorptionsmittel vorgesehen ist.

17. Sorptions-Kühleinrichtung nach einem der vorhergehenden Ansprüche, **dadurch gekennzeichnet, dass** Wasser als Arbeitsmittel vorgesehen ist.

18. Sorptions-Kühleinrichtung nach einem der vorhergehenden Ansprüche, **dadurch gekennzeichnet, dass** die Schließkraft des andauernd wirkenden Kraftelements derart bemessen ist, dass es bei einem im Sorber herrschenden Überdruck von wenigstens 20 mbar eine Öffnung des Ventils gegen die Selbsthaltekraft ermöglicht, derart, dass Arbeitsmitteldampf in den Verdampfer zurückströmen kann.

19. Sorptions-Kühleinrichtung nach einem der vorhergehenden Ansprüche, **dadurch gekennzeichnet, dass** die Kraft des lediglich zeitweise wirkenden Kraftelements derart bemessen ist, dass es das Ventil bei einem im Verdampfer herrschenden Überdruck bis zu 100 mbar gegenüber dem Sorber öffnen kann.

20. Sorptions-Kühleinrichtung nach einem der vorhergehenden Ansprüche, **dadurch gekennzeichnet, dass** der freie Strömungsquerschnitt des Strömungskanals wenigstens 20 cm² beträgt.
